(19) Europäisches Patentamt
European Patent Office
Office européen des brevets

(11) Veröffentlichungsnummer: **0 010 721**
**B1**

(12) # EUROPÄISCHE PATENTSCHRIFT

(45) Veröffentlichungstag der Patentschrift: **25.11.81**

(51) Int. Cl.³: **C 09 B 29/33,** D 06 P 1/02, C 08 K 5/23, C 07 D 235/04

(21) Anmeldenummer: **79104099.1**

(22) Anmeldetag: **23.10.79**

(54) **Monoazoverbindungen der Acetoacetylaminobenzolreihe, Verfahren zu ihrer Herstellung und ihre Verwendung.**

(30) Priorität: **31.10.78 DE 2847284**

(43) Veröffentlichungstag der Anmeldung: **14.05.80 Patentblatt 80/10**

(45) Bekanntmachung des Hinweises auf die Patenterteilung: **25.11.81 Patentblatt 81/47**

(84) Benannte Vertragsstaaten: **CH DE FR GB**

(56) Entgegenhaltungen:
**FR-A-1 396 150**
**FR-A-2 376 886**

(73) Patentinhaber: **HOECHST AKTIENGESELLSCHAFT, Postfach 80 03 20, D-6230 Frankfurt/Main 80 (DE)**

(72) Erfinder: **Fuchs, Otto, Dr., Oestricher Weg 11, D-6000 Frankfurt am Main 71 (DE)**

EP 0 010 721 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# Monoazoverbindungen der Acetoacetylaminobenzolreihe, Verfahren zu ihrer Herstellung und ihre Verwendung

Gegenstand der Erfindung sind Monoazoverbindungen der allgemeinen Formel I

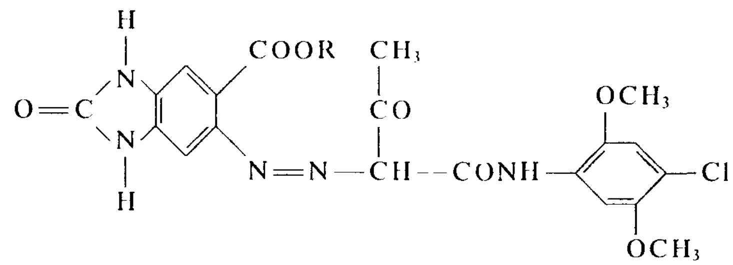

in der R für Wasserstoff, Methyl oder Äthyl steht.

Die Erfindung betrifft weiterhin ein Verfahren zur Herstellung der genannten Monoazoverbindungen, das dadurch gekennzeichnet ist, daß man Verbindungen der allgemeinen Formel II

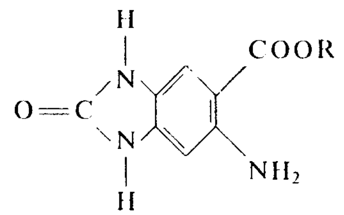

(II)

in der R die oben angegebene Bedeutung hat, beispielsweise in wäßriger Lösung oder Suspension, gegebenenfalls unter Zusatz von Lösevermittlern, diazotiert und die erhaltene Diazoniumverbindung auf die Verbindung der Formel III

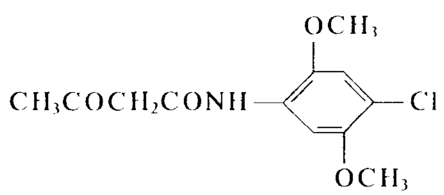

kuppelt.

Weiterhin betrifft die Erfindung die Verwendung der erfindungsgemäßen Monoazoverbindungen als Pigmente.

Die Diazokomponenten, 5-Amino-benzimidazolon-6-carbonsäure und ihr Methyl- und Äthylester, können beispielsweise hergestellt werden, indem man die Benzimidazol-2-on 5-carbonsäure oder ihre Ester nitriert und die erhaltenen Nitroverbindungen reduziert.

Die Diazotierung erfolgt bevorzugt bei Temperaturen von $-20$ bis $+30°$ C, insbesondere bei 0 bis 20° C, und die Kupplung bei Temperaturen von 0 bis 60° C, insbesondere bei 20 bis 40° C.

Zur Erzielung einer optimalen Pigmentform erfolgt zweckmäßig eine thermische Nachbehandlung des Kupplungsprodukts bei 60 bis 200° C.

Im folgenden werden weitere bevorzugte Ausgestaltungen der Erfindung näher erläutert.

Die Kupplung wird vorzugsweise im schwach sauren Bereich eventuell unter Zusatz von die Kupplung fördernden Substanzen, beispielsweise Dispergiermittel oder organische Lösungsmittel, vorgenommen. Sie läßt sich kontinuierlich und diskontinuierlich ausführen. Es ist vorteilhaft, die Suspension nach beendeter Kupplung noch einige Zeit nachzuerhitzen, eventuell auch auf Temperaturen über 100° C unter Verwendung eines Druckgefäßes.

Man kann auch so verfahren, daß man das rohe Pigment zunächst isoliert und wäscht und anschließend das salzfreie neutrale Rohpigment einer Hitzebehandlung in wäßriger oder wäßrig-lösemittelhaltiger Suspension bei Temperaturen zwischen 60 und 180° C, vorzugsweise 90–150° C, unterwirft. Eine weitere Variante der Lösungsmittelbehandlung besteht darin, daß man den feuchten Preßkuchen mit einem geeigneten Lösemittel verrührt, das Wasser abdestilliert und dann die weitgehend oder völlig wasserfreie Suspension auf Temperaturen über 100° C erhitzt, danach das Lösemittel mit Wasserdampf entfernt und das Pigment isoliert. Man kann das Pigment auch direkt aus der Lösemittelsuspension abfiltrieren und das anhaftende Lösemittel in einem dafür geeigneten Apparat, z. B. in einem Taumeltrockner, entfernen.

Als Lösemittel, die sich für die Nachbehandlung der Rohpigmente eignen, seien beispielsweise genannt:
Toluol, Xylol, Chlorbenzol, o-Dichlorbenzol, Pyridin, Picolin, Methanol, Äthanol, Isopropanol, n-Butanol, Isobutanol, niedere Glykol-mono-alkyläther oder Diglykolmono-alkyläther, Aceton, Methyläthylketon, Dimethylformamid, Dimethylsulfoxid, N-Methylpyrrolidon und Tetramethylensulfon.

Die erfindungsgemäßen gelben Monoazopigmente eignen sich hervorragend zum Pigmentieren von Einbrennlacken, in denen sie neben ausgezeichneter Licht- und Wetterechtheit eine sehr gute Überlackierechtheit und gute Thermostabilität auch bei hohen Einbrenntemperaturen zeigen. Ferner sind sie gut geeignet zum Färben von Polyvinylchlorid in der Masse, da sie neben hoher Lichtechtheit auch eine sehr geringe Migrationsneigung, auch in stark weich gestelltem Polyvinylchlorid, aufweisen.

In den folgenden Beispielen beziehen sich Prozentangaben auf das Gewicht.

## Beispiel 1

5,2 g 5-Amino-benzimidazol-2-on-6-carbonsäuremethylester werden in 20 ml 30%iger Salzsäure und 125 ml Wasser mit Natriumnitritlösung bei 0°C diazotiert. In einem zweiten Gefäß werden 7,0 g 2-Acetoacetylamino-5-chlor-hydrochinondimethyläther in 200 ml Wasser suspendiert, durch Zugabe von 9 ml 30%iger Natronlauge und 0,75 g Dimethylcocosfettaminoxid gelöst und dann mit 9 ml Eisessig gefällt. In diese Suspension läßt man bei 20—25°C unter gleichzeitiger Zugabe von 5%iger Natronlauge in der Weise, daß während der gesamten Kupplung ein pH-Wert von 5,0—5,5 aufrechterhalten wird, die geklärte Diazoniumsalzlösung innerhalb von 2 Stunden zutropfen. Nach beendeter Kupplung wird der Ansatz 30 Minuten auf 90°C erhitzt, das gebildete Rohpigment heiß abfiltriert und mit heißem Wasser gewaschen.

Das feuchte Nutschgut wird mit 160 ml Wasser und 250 g Isobutanol verrührt und in einem Druckgefäß unter Rühren drei Stunden auf 125°C erhitzt. Nach Abkühlen unter den Siedepunkt wird das Isobutanol mit Wasserdampf abdestilliert, das Pigment abfiltriert, mit heißem Wasser gewaschen, getrocknet und gemahlen. Man erhält 12,0 g eines gelben, mikrokristallinen Pulvers. Es eignet sich hervorragend zum Pigmentieren von Einbrennlacken, in denen es eine sehr gute Überlackierechtheit aufweist. Es zeichnet sich ferner aus durch seine ausgezeichnete Licht- und Wetterechtheit.

Verwendet man anstelle von 5,2 g 5-Amino-benzimidazol-2-on-6-carbonsäuremethylester die äquivalente Menge des Äthylesters, so erhält man ein Pigment, dem ähnliche Eigenschaften wie dem oben beschriebenen zukommen.

## Beispiel 2

9,6 g 5-Amino-benzimidazol-2-on-6-carbonsäure werden in 100 ml Wasser durch Zugabe von 9,2 g 30%iger Natronlauge gelöst. Die filtrierte Lösung läßt man unter Rühren zu 50 ml 30%iger Salzsäure zulaufen. Die Suspension wird auf 0—5°C abgekühlt und das Aminhydrochlorid durch Zutropfen von Natriumnitritlösung diazotiert. Eventuell überschüssige salpetrige Säure wird durch Zugabe von wenig Amidosulfonsäure entfernt.

14,0 g 2-Acetoacetylamino-5-chlor-hydrochinondimethyläther werden in 400 ml Wasser suspendiert, dann durch Zugabe von 18,0 ml 30%iger Natronlauge und 1,5 g Dimethylcocosfettaminoxid gelöst. Durch langsames Zutropfen von 36,0 ml 50%iger Essigsäure wird die Kupplungskomponente in feiner Form ausgefällt. Nach Zusatz von 50 g wasserfreiem Natriumacetat läßt man bei 30—40°C die filtrierte Diazoniumsalzlösung zutropfen. Zur Vervollständigung der Kupplung wird noch eine Stunde bei 60°C gerührt, dann die Temperatur auf 80°C erhöht und zwei Stunden bei dieser Temperatur gehalten. Das entstandene Rohpigment wird abfiltriert und mit heißem Wasser gewaschen.

Das feuchte Rohpigment wird mit 120 ml Wasser und 300 g Isobutanol in der gleichen Weise behandelt wie im Beispiel 1 beschrieben. Nach Filtration, Waschen, Trocknen und Mahlen erhält man 22,5 g eines gelben Kristallpulvers, das sich hervorragend zum Pigmentieren von Einbrennlacken und Weich-PVC eignet. Die mit ihm hergestellten Lackierungen zeichnen sich durch sehr gute Licht- und Wetterechtheit und durch einwandfreie Überlackierechtheit aus. In Weich-PVC verarbeitet zeigt das Pigment eine gute Migrationsechtheit.

**Patentansprüche**

1. Monoazoverbindungen der allgemeinen Formel

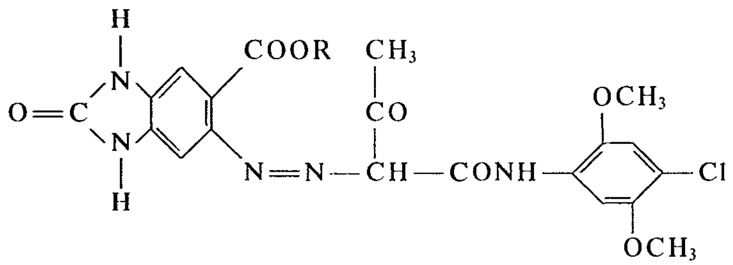

in der R für Wasserstoff, Methyl und Äthyl steht.

2. Verbindung nach Anspruch 1, in der R Wasserstoff ist.

3. Verbindung nach Anspruch 1, in der R Methyl ist.

4. Verbindung nach Anspruch 1, in der R Äthyl ist.

5. Verfahren zur Herstellung der Monoazoverbindungen nach Anspruch 1, dadurch gekennzeichnet, daß man Verbindungen der allgemeinen Formel

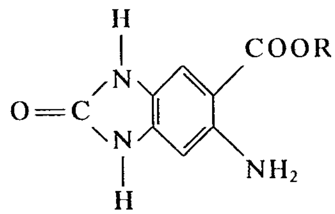

in der R die in Anspruch 1 angegebene Bedeutung hat, diazotiert und die erhaltenen Diazoniumsalze auf die Verbindung der Formel

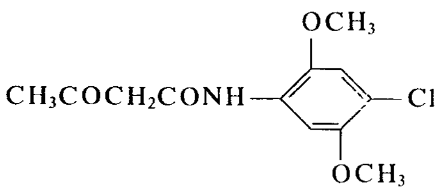

kuppelt.

6. Verfahren nach Anspruch 5, dadurch gekennzeichnet, daß die Diazotierung bei −20 bis +30°C und die Kupplung bei 0 bis 60°C erfolgt.

7. Verfahren nach Anspruch 5 und 6, dadurch gekennzeichnet, daß die Diazotierung bei 0 bis 20°C und die Kupplung bei 20 bis 40°C erfolgt.

8. Verfahren nach Anspruch 5 bis 7, dadurch gekennzeichnet, daß das Kupplungsprodukt bei 60 bis 200°C nachbehandelt wird.

9. Verwendung der Verbindungen nach Anspruch 1 als Pigmente.

10. Verwendung der Verbindungen nach Anspruch 1 zum Pigmentieren von Druckfarben, Lacken, Kunststoffen und Spinnmassen.

## Claims

1. Monoazo compounds of the general formula

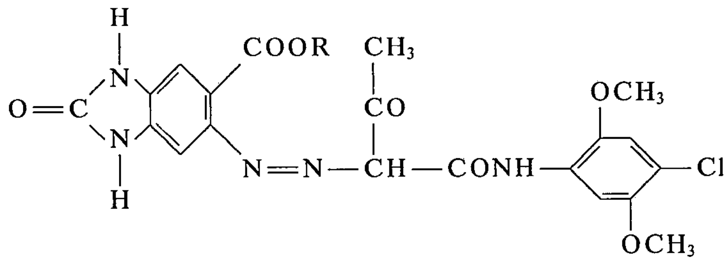

wherein R is hydrogen, methyl or ethyl.

2. The compound as claimed in claim 1, wherein R is hydrogen.

3. The compound as claimed in claim 1, wherein R is methyl.

4. The compound as claimed in claim 1, wherein R is ethyl.

5. A process for preparing the monoazo compounds according to claim 1, characterized by diazotizing compounds of the general formula

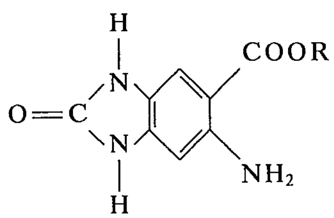

in which R has the meaning given in claim 1, and coupling the so-obtained diazonium salts onto the compound of the formula

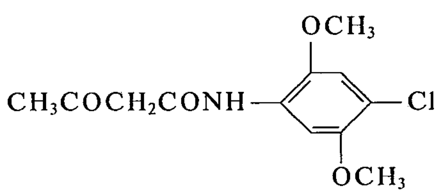

6. Process according to claim 5, characterized in that the diazotization occurs at −20 to +30° C and the coupling at 0 to 60° C.

7. Process according to claims 5 and 6, characterized in that the diazotization occurs at 0 to 20° C and the coupling at 20 to 40° C.

8. Process according to claims 5 to 7, characterized in that the coupling product is aftertreated at 60 to 200° C.

9. Use of the compounds according to claim 1 as pigments.

10. Use of the compounds according to claim 1 for pigmenting printing inks, varnishes, plastics and spinning masses.

## Revendications

1. Composés mono-azoïques répondant à la formule générale

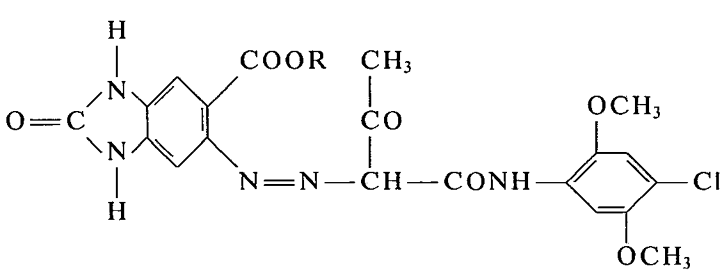

dans laquelle R représente l'hydrogène, un radical méthyle ou un radical éthyle.

2. Composé selon la revendication 1, dans lequel R représente l'hydrogène.

3. Composé selon la revendication 1, dans lequel R représente un radical méthyle.

4. Composé selon la revendication 1, dans lequel R représente un radical éthyle.

5. Procédé de préparation de composés monoazoïques selon la revendication 1, procédé caractérisé en ce qu'on diazote des composés répondant à la formule générale

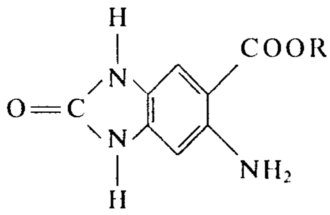

dans laquelle R a la signification qui a été donnée à la revendication 1, et on copule les sels de diazonium obtenus sur le composé de formule

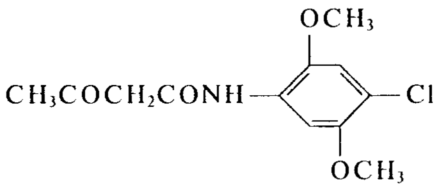

6. Procédé selon la revendication 5, caractérisé en ce qu'on effectue la diazotation à une température comprise entre −20 et +30° C et la copulation entre 0 et 60° C.

7. Procédé selon l'une des revendications 5 et 6, caractérisé en ce qu'on effectue la diazotation à une température de 0 à 20° C et la copulation à une température de 20 à 40° C.

8. Procédé selon l'une quelconque des revendications 5 à 7, caractérisé en ce qu-on soumet le produit de copulation à un traitement complémentaire à une température de 60 à 200° C.

9. Utilisation des composés selon la revendication 1, comme pigments.

10. Application des composés selon la revendication 1, à la pigmentation d'encres d'impression, de vernis, de matières plastiques et de matières à filer.